(19) Europäisches Patentamt
European Patent Office
Office européen des brevets

(11) EP 0 548 639 B1

(12) **EUROPÄISCHE PATENTSCHRIFT**

(45) Veröffentlichungstag und Bekanntmachung des Hinweises auf die Patenterteilung:
**10.06.1998 Patentblatt 1998/24**

(51) Int Cl.6: **C08G 65/00**, C08G 65/34, C11D 1/66, C11D 3/37

(21) Anmeldenummer: **92120782.5**

(22) Anmeldetag: **05.12.1992**

(54) **Die Verwendung von Polyacetalen auf Basis von Vinylethern und Dihydroxyverbindungen in Wasch- und Reinigungsmitteln**

The use of polyacetals based on vinylethers and dihydroxy compounds in detergent compositions

L'utilisation de polyacetals à base des composés vinyl éther et dihydroxy dans des compositions détergentes

(84) Benannte Vertragsstaaten:
**BE CH DE ES FR GB IT LI NL**

(30) Priorität: **20.12.1991 DE 4142130**

(43) Veröffentlichungstag der Anmeldung:
**30.06.1993 Patentblatt 1993/26**

(73) Patentinhaber: **BASF Aktiengesellschaft 67063 Ludwigshafen (DE)**

(72) Erfinder:
• **Kroner, Matthias, Dr.**
  **W-6719 Eisenberg (DE)**
• **Hartmann, Heinrich, Dr.**
  **W-6703 Limburgerhof (DE)**
• **Baur, Richard, Dr.**
  **W-6704 Mutterstadt (DE)**
• **Schwendemann, Volker, Dr.**
  **W-6730 Neustadt (DE)**
• **Jaeger, Hans-Ulrich, Dr.**
  **W-6730 Neustadt (DE)**
• **Perner, Johannes, Dr.**
  **W-6730 Neustadt (DE)**

(56) Entgegenhaltungen:
EP-A- 0 001 004          EP-A- 0 315 021
EP-A- 0 514 652          DE-A- 2 431 032
GB-A- 1 089 871          US-A- 4 713 441

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft die Verwendung von Polyacetalen, die durch kationisch initiierte Polyaddition von (a) Divinylethern und (b) Dihydroxyverbindungen sowie gegebenenfalls (c) Monohydroxyverbindungen erhältlich sind und die K-Werte von 8 bis 100 haben, als Zusatz zu phosphatarmen oder phosphatfreien Wasch- und Reinigungsmitteln.

Aus der US-A-2 104 000 ist ein Verfahren zur kationischen Polymerisation von Vinylethern bekannt, bei dem man als Katalysator 0,001 bis 5 Gew.-% einer praktisch wasserfreien anorganischen Säure einsetzt. Geeignete Katalysatoren sind beispielsweise Aluminiumchlorid, Eisenchlorid, Schwefelsäure, Salzsäure und Bortrifluorid.

Aus der US-B-26 407 ist die radikalische Copolymerisation von Divinylverbindungen, wie Divinylether, Divinyldimethylsilan oder Divinylsulfon mit monoethylenisch ungesättigten Monomeren bekannt, z. B. Vinylacetat, Maleinsäureanhydrid oder Fumarsäuredimethylester. Geeignete Katalysatoren sind Peroxiverbindungen, wie Di-tert.-butylperoxid, Wasserstoffperoxid, Alkylhydroperoxide und Diacylperoxide. Außerdem eignen sich Ziegler-Katalysatoren zur Initiierung der Polymerisation. Die so erhältlichen Polymerisate sind faser- und filmbildend und können zur Herstellung von Beschichtungen oder Verpackungsmaterialien verwendet werden. Sie eignen sich außerdem als Schmiermittel und Schmiermitteladditive, Klebstoffe und als Vernetzungsmittel für Epoxyharze.

Aus der US-A-3 328 468 ist die Herstellung von Homopolymerisaten des Monovinylethers von Diethylenglykol unter Verwendung von Polymerisationsinitiatoren bekannt, die unter den Polymerisationsbedingungen Radikale bilden. Die Hydroxylgruppe der Monovinylether von Diethylenglykol bleibt bei der radikalischen Polymerisation praktisch unverändert. Die so erhältlichen Polymeren können Polyole bei der Schaumstoffherstellung ersetzen. Wie aus dieser Literaturstelle außerdem bekannt ist, können Monovinylether von Diolen unter Einwirkung kationischer Initiatoren unter Bildung von Polyacetalen polymerisiert werden.

Aus der EP-A-0 359 055 sind Waschmittelformulierungen bekannt, die 0,5 bis 65 Gew.-% eines oberflächenaktiven Mittels und 1 bis 80 Gew.-% eines Builders enthalten, der aus einem Polymer besteht, das durch radikalische Copolymerisation von Divinylether und Maleinsäureanhydrid im Molverhältnis 1:2 und anschließende Hydrolyse der Anhydridgruppen und Neutralisation erhältlich ist.

Aus der EP-A-0 379 166 sind u.a. auch Copolymerisate aus Alkylvinylethern und hydroxylgruppenhaltigen Vinylethern, wie Hydroxyethylvinylether, Hydroxypropylvinylether, Hydroxybutylvinylether und Alkoxylaten dieser hydroxylgruppenhaltigen Vinylether bekannt. Die Copolymerisate werden in Beschichtungs- und Formmassen zur Verbesserung des Verlaufs oder als Antischaummittel eingesetzt.

Aus der US-A-3 131 162 ist die Copolymerisation von Monovinylethern von Glykolen mit Vinylestern von gesättigten Fettsäuren mit einer Kohlenstoffkette mit bis zu 6 Kohlenstoffatomen in Gegenwart von Peroxiden bekannt. Die Copolymerisate können unter Zusatz üblicher Vulkanisierhilfsmittel zu gummiartigen Materialien vulkanisiert werden.

Aus Journal of Polymer Science: Polymer Letters Edition, Vol. 18, 293-297 (1980) ist die Herstellung von Polyacetalen durch Säure katalysierte Anlagerung von Polyolen an Divinylether bekannt. So erhält man beispielsweise durch Polyaddition von trans-1,4-Cyclohexandimethanol an Butandiol-divinylether unter der katalytischen Wirkung von p-Toluolsulfonsäure ein Polyacetal mit einem Molekulargewicht von 200 000. Die beschriebenen Polyacetale werden in der Medizin zur kontrollierten Freisetzung von Wirkstoffen verwendet.

Der vorliegenden Erfindung liegt die Aufgabe zugrunde, die Primärwaschwirkung von phosphatarmen und von phosphatfreien Wasch- und Reinigungsmitteln zu verbessern.

Die Aufgabe wird erfindungsgemäß gelöst mit der Verwendung von Polyacetalen, die durch kationisch initiierte Polyaddition von

(a) Divinylethern und
(b) Dihydroxyverbindungen sowie gegebenenfalls
(c) Monohydroxyverbindungen

erhältlich sind und die K-Werte (bestimmt nach H. Fikentscher in Tetrahydrofuran bei 25°C und einer Polyacetalkonzentration von 1 Gew.-%) von 8 bis 100 haben, als Zusatz zu weniger als 25 Gew.-% Phosphat enthaltenden oder phosphatfreien Wasch- und Reinigungsmitteln.

Als Monomere der Gruppe (a) kommen sämtliche Divinylether in Betracht, z.B. Divinylether, Furan, Ethylenglykoldivinylether, Diethylenglykoldivinylether, Triethylenglykoldivinylether, Tetraethylenglykoldivinylether, Propylenglykoldivinylether, 1,4-Butandioldivinylether, 1,6-Hexandioldivinylether, Bis -(hydroxymethyl)cyclohexandimethanoldivinylether, Polytetrahydrofurandivinylether mit Molekulargewichten von 250 bis 4 500, Polyethylenglykoldivinylether mit Molekulargewichten des Polyethylenglykols bis zu 20 000, Polypropylenglykoldivinylether mit Molekulargewichten bis zu 10 000, sowie Divinylether von Copolymerisaten aus Polyethylenoxid und Polypropylenoxid mit Molekulargewichten bis zu 10 000 sowie Divinylether von Diolen, die durch Wasserabspaltung von Polyolen erhältlich sind, bspw. Dianhydrosorbit-divinylether, Dianhydromannit-divinylether oder Dianhydroerythritdivinylether. Es können sämtliche Divinylether nachstehend genannter Dihydroxyverbindungen verwendet werden. Als Monomere der Gruppe (b) verwendet man Dihydroxyverbindungen. Prinzipiell können alle Verbindungen verwendet werden, die 2 OH-Gruppen aufweisen, z.B. Alkylenglykole, wie Ethylenglykol, Diethylenglykol, Triethylenglykol, Tetraethylenglykol, Polyethylenglykole bis zu Molekulargewichten von 10 000, Propylenglykol, Dipropylenglykol, Polypropylenglykole mit Molekulargewichten bis zu 10 000, Copolymerisate aus Ethylenoxid und Propylenoxid und gegebenenfalls Butylenoxid mit Molekulargewichten bis zu 10 000, Polytetrahydrofuran mit Molekulargewichten bis zu 10 000, 1,2-Butandiol, 1,3-Butandiol, 1,4-Butandiol, 1,2-Pentandiol, Neopentylglykol, 1,5-Pentandiol, 1,2-Hexandiol, 1,3-Hexandiol, 1,4-Hexandiol, 1,5-Hexandiol, 1,6-Hexandiol, 1,7-Heptandiol, 1,8-Octandiol, 2,5-Dimethyl-2,5-hexandiol, 1,4-Bis-(hydroxymethyl)cyclohexan, Brenzkatechin, Resorzin und Hydrochinon. Außer den Alkylenglykolen und Phenolen können auch solche Dihydroxiverbindungen als Monomer der Gruppe (b) eingesetzt werden, die zusätzlich weitere funktionelle Gruppen tragen, z.B. Ester-, Amid-, Nitril-, Ether-, Acetal-, Imidoester-, Keton-, Imid- und Thioethergruppen sowie CC-Doppel- oder CC-Dreifachbindungen. Beispiele für geeignete Verbindungen dieser Art sind Weinsäuredimethylester, Weinsäurediethylester, 2,2-Bis(hydroxymethyl)propionsäuremethylester, Hydroxypivalinsäureneopentylglykolester, 2-Buten-1,4-diol und 3-Hexin-2,5-diol, Terephthalsäure-bis(ethylenglykolester), 1-Phenyl-ethylenglykol, Octadecandiol aus hydriertem Rizinusöl. Beispiele für weitere geeignete Monomere der Gruppe (b) sind Dihydroxycarbonsäureester, die aus natürlichen Fetten und Ölen isoliert werden können oder mittels enzymatischen, bakteriellen oder chemischen Reaktionen herstellbar sind. Beispiele für solche Verbindungen sind Dihydroxyfettsäuren wie 10,12-Dihydroxystearinsäure, 9,10-Dihydroxystearinsäure, 9,12-Dihydroxy-10-octadecensäure, 9,12-Dihydroxy-9-oxo-10-octadecensäure, 10,13-Dihydroxy-11-octadecensäure und 12,13-Dihydroxy-9-oxo-10-octadecensäure. Dihydroxyfettsäureester sind außerdem durch Hydroxylieren und Oxidieren von Fettsäuren natürlicher Herkunft erhältlich, beispielsweise aus Ricinolsäure, Linolsäure, Ölsäure, Linolensäure, Elaidinsäure, Palmitoleinsäure, Myristoleinsäure, Palmitinsäure und Stearinsäure. Durch Wasserabspaltung von Polyolen entstandene Diole, wie beispielsweise Dianhydrosorbit, Dianhydromannit, Dianhydroerythrit sind ebenfalls geeignet. Bevorzugt eingesetzte Monomere der Gruppe (b) sind Triethylenglykol, Weinsäuredimethylester und Weinsäurediethylester.

Geeignete Monohydroxyverbindungen der Gruppe (c), die gegebenenfalls bei der kationisch initiierten Polyaddition mitverwendet werden, sind aliphatische und aromatische Verbindungen, die jeweils eine Hydroxylgruppe aufweisen. Die üblicherweise in Betracht kommenden Hydroxylgruppen enthaltenden aliphatischen und aromatischen Verbindungen enthalten bis zu 30 Kohlenstoffatome im Molekül. Bei diesen Stoffen handelt es sich in erster Linie um Alkohole und Phenole. Sie können jedoch auch noch weitere funktionelle Gruppen enthalten, beispielsweise Ester-, Amid-, Nitril-, Ether, Acetal-, Amidoester-, Imid- und Thioethergruppen sowie CC-Doppelbindungen und CC-Dreifachbindungen enthalten. Beispiele für in Betracht kommende Verbindungen sind $C_1$- bis $C_{30}$-einwertige Alkohle, wie Methanol, Ethanol, n-Propanol, Isopropanol, n-Butanol, Isobutanol, tert.-Butanol, Pentanole, 2-Methylbutanol, 3-Methylbutanol, tert.-Amylalkohol, 3-Methyl-3-pentanol, Cyclohexanol, n-Hexanol, n-Octanol, Isooctanol, Decanol, Dodecanol, Stearylalkohol und Palmitylalkohol, sowie Oxoalkohole, die durch Anlagerung von Kohlenmonoxid und Wasserstoff an Olefine nach dem Oxoverfahren erhältlich sind, Allylalkohol, Phenol, o-, m- und p-Kresol, Alkylphenole, Benzylalkohol, Propargylalkohol, Butinol, 3-Methyl-3-buten-1-ol, 3-Methyl-2-buten-l-ol, 2-Methyl-3-buten-2-ol, 2-Methyl-3-butin-2-ol und 1-Ethinylcyclohexanol.

Außerdem kommen als Monomere der Gruppe (c) Umsetzungsprodukte von Alkoholen und Phenolen mit 1 bis 100 Mol Alkylenoxiden in Betracht. Geeignete Alkylenoxide sind beispielsweise Ethylenoxid, Propylenoxid und Butylenoxide. Geeignete Alkoxylierungsprodukte sind beispielsweise Ethylenglykolmonomethylether, Ethylenglykolmonoethylether, Ethylenglykolmonobutylether, Propylenglykolmonobutylether, 1,2-Butylenglykolmonomethylether, 2-(4-Methoxyphenyl)-ethanol, Diethylenglykolmonomethylether, Diethylenglykolmonoethylether, Diethylenglykolmonobutylether, Umsetzungsprodukte von 1 Mol Methanol mit 3,9 oder 25 Mol Ethylenoxid, Umsetzungsprodukte eines Oxoalkohols mit 3 bis 25 mol Ethylenoxid. Weitere geeignete monofunktionelle Alkohole sind beispielsweise Ethylenchlorhydrin, Propylenchlorhydrin, 6-Chlorhexanol, 8-Chloroctanol, Glykolsäuremethylester, Glykolsäureethylester, Milchsäuremethylester, Milchsäureethylester, Milchsäureisopropylether, Milchsäure-n-butylester, Milchsäure-isobutylester, Mandelsäuremethylester, Mandelsäureethylester, Hydroxipropionnitril, Hydroxibuttersäuremethylester, Hydroxybuttersäureethylester, Hydroxyvaleriansäuremethylester, Hydroxyvaleriansäureethylester, Hydroxyvaleriansäureisopropylester, Hydroxyisovaleriansäuremethylester, Hydroxyisovaleriansäureethylester, Hydroxyisobuttersäuremethylester, Hydroxyisobuttersäureethylester, Hydroxypivalinsäuremethylester, Hydroxypivalinsäureethylester, Benzilsäureethylester, Mandelsäurenitril, Hydroxymalonsäurediethylester, Hydroxymethylmaleinsäurediethylester, Hydroxymethylmalonsäurediethylester, Äpfelsäurediethylester, Zitronensäuretriethylester, Hydroxycrotonsäureethylester, Äpfelsäuredimethylester, Zitronensäuretrimethylester, Zitronensäuretri-n-propylester, Hydroxycrotonsäuremethylester, 3-Hydroxy-4-hexensäuremethylester, 2-Hydroxy-3,3-Dimethylbutyrolacton, Hydroxyaceton, Glykolaldehyd, Vanillin, Eugenol, Salicylaldehyd und Acetoin.

Außerdem eignen sich Hydroxyfettsäureester, die bakteriell, enzymatisch oder durch chemische Hydroxylierung von Ölen oder Fetten natürlichen Ursprungs herstellbar sind, beispielsweise auf Basis von Linolsäure, Linolensäure, Ölsäure, Elaidinsäure, Ricinolsäure, Palmitinsäure und Stearinsäure. Hieraus erhält man beispielsweise 10-Hydroxy-12-octadecensäuremethylester, 10-Hydroxy-12,15-octadecadiensäuremethylester, 12-Hydroxyölsäuremethylester, Ricinolsäuremethylester, 10-Hydroxyoctadecansäuremethylester, 10-Hydroxystearinsäuremethylester, Hydroxypalmitinsäuremethylester, 10-Hydroxyhexadecansäuremethylester, 13-Hydroxy-12,13-epoxy-10-octadecansäuremethylester, 9-Hydroxy-10-oxo-12-octadecensäuremethylester und 13-Hydroxypalmitinsäuremethylester.

Die Monomeren (a), (b) und gegebenenfalls (c) werden kationisch polymerisiert. Hierbei addiert die OH-Gruppe eines Monomeren der Gruppe (b) an eine Vinylethergruppe des Monomers der Gruppe (a) unter Bildung eines Acetaldehydacetals. Bei dieser Polymerisation erhält man eine polymere Hauptkette, in der die Monomereinheiten über Acetaldehydacetale miteinander verknüpft sind. Die kationische Copolymerisation der Monomeren der Gruppen (a), (b) und gegebenenfalls (c) kann mit Hilfe von allen organischen oder anorganischen sauer reagierenden Stoffen initiiert werden. Geeignete kationische Initiatoren sind beispielsweise Oxalsäure, Weinsäure, Adipinsäure, Bernsteinsäure, Bernsteinsäureanhydrid, Zitronensäure, Ameisensäure, Essigsäure, Propionsäure, Äpfelsäure, ein- oder mehrfach halogenierte Carbonsäuren, wie Trifluoressigsäure oder Trichloressigsäure, Chlorwasserstoff, Bromwasserstoff, Jodwasserstoff, Schwefelsäure, Phosphorsäure, Benzolsulfonsäure, p-Toluolsulfonsäure, Borsäure, Ascorbinsäure, saures Aluminiumoxid, Aluminiumsulfat, Kaliumaluminiumsulfat, Eisen-II-sulfat, Eisen-III-sulfat, Aluminiumoxid, Titanylsulfat, Eisen-III-chlorid, Bortrifluorid, Bortrichlorid, Bortribromid, Jod, Ionenaustauscher in der Säureform und mit Säure beladene inerte feste Stoffe. Die Initiatoren für die kationische Polymerisation werden üblicherweise in Mengen von 0,001 bis 20, vorzugsweise 0,01 bis 1 Gew.-%, bezogen auf die Monomeren der Gruppen (a) und (b), eingesetzt. Die Copolymerisation verläuft stark exotherm. Die Reaktionstemperaturen betragen je nach Aktivität des eingesetzten Initiators zwischen -20 und 250, vorzugsweise 0 bis 200°C.

Beispielsweise reagieren die Monomeren (a) und (b) bei Anwesenheit von 0,1 bis 5 Gew.-% p-Toluolsulfonsäure bereits bei 40°C in einer exothermen Reaktion innerhalb von 10 min. vollständig ab. Verwendet man zur Initiierung der Copolymerisation 0,2 Gew.-% Oxalsäure, so ist die Copolymerisation bei 90°C innerhalb 1 Stunde und bei 130°C bereits innerhalb von 10 Minuten beendet. Es ist aber auch möglich, die mittels Oxalsäure initiierte Copolymerisation bei 200°C innerhalb weniger Sekunden ablaufen zu lassen. Allgemein wählt man bei der Initiierung mittels schwächerer Säuren (Weinsäure, Oxalsäure oder Zitronensäure) Temperaturen oberhalb von 70°C, während man bei Verwendung von starken Säuren, wie Toluolsulfonsäure, die Reaktionstemperaturen unter 70°C hält. Bei der Copolymerisation entstehen meistens farblose und bei Verwendung von Oxalsäure und Weinsäure als Katalysator thermische sehr beständige Öle oder Harze. Die Temperaturbeständigkeit der so hergestellten Copolymerisate reicht bis zu 250°C.

Die kationische Polymerisation der Monomeren (a), (b) und gegebenenfalls (c) wird bevorzugt in Abwesenheit eines Lösemittels durchgeführt. Es ist aber auch möglich, in Gegenwart von inerten Verdünnungsmitteln zu arbeiten. Dies kann in bestimmten Fällen von Vorteil sein, weil die Reaktionswärme dann mit Hilfe des verdampfenden Verdünnungsmittels leicht abgeführt werden kann. Bei Verwendung einer starken Säure als Initiator benutzt man bevorzugt eine Lösung des Initiators in einem Verdünnungsmittel, beispielsweise eine 0,005 bis 10 gew.-%ige, besonders bevorzugt eine 0,01 bis 5 gew.-%ige Lösung von p-Toluolsulfonsäure in Toluol.

Als Verdünnungsmittel bei der kationischen Copolymerisation kommen alle Verdünnungsmittel in Betracht, die keine funktionellen Gruppen tragen, die mit Vinylethern reagiern können. Vorzugsweise werden solche Verdünnsungsmittel verwendet, die leicht in wasserfreier Form erhältlich und nicht hygroskopisch sind. Beispiele für geeignete Verdünnungsmittel sind Essigsäureethylester, Diethylenglykoldiethylether, Ethoxyethylacetat, Butoxyethylacetat, aliphatische Kohlenwasserstoffe, wie Pentan, Hexan, Cyclohexan, n-Heptan, n-Octan und Isooctan sowie aromatische Kohlenwasserstoffe, wie Toluol, Xylol, Mesitylen, Tetralin und Anisol. Geeignete Lösungsmittel sind ferner Tetrahydrofuran, Dioxan und Decalin, Aceton, Ethylmethylketon und Cyclohexanon.

Die Copolymerisation kann beispielsweise als Eintopfreaktion durchgeführt werden. Hierzu kann man die Monomeren der Gruppen (a) und (b) und gegebenenfalls (c) in einem Reaktionsfäß unter Ausschluß von Luftfeuchtigkeit mischen, mit Initiator versetzen und auf die erforderliche Reaktionstemperatur erwärmen. In einer bevorzugten Ausführungsform legt man die gesamte Initiatormenge im Reaktionsgefäß zusammen mit 10 % der zu polymerisierenden Monomermischung der Komponenten (a), (b) und gegebenenfalls (c) bei 20°C vor und startet die Polymerisationsreaktion vorzugsweise unter Inertgasatmosphäre durch Erhitzen der im Reaktionsgefäß vorgelegten Komponenten. Hierbei wird die Mischung gerührt und auch während der folgenden Copolymerisation. Sobald die Polymerisation in Gang gekommen ist, gibt man die restliche Monomermischung der Verbindungen der Komponenten (a), (b) und kontinuierlich (c) kontinuierlich oder absatzweise zur Vorlage in dem Maße zu, daß die Polymerisationswärme sicher abgeführt werden kann. Wenn man Oxalsäure, Weinsäure oder Zitronensäure als Initiator einsetzt, benötigt man zum Start der Copolymerisation der Monomeren (a), (b) und gegebenenfalls (c) Temperaturen von etwa 70 bis etwa 160°C. Die Säuren lösen sich dann in der Monomermischung zu einer homogenen Lösung und die Polymerisation beginnt.

Bei Initiatoren, die sich in der Monomermischung nicht lösen, wird die heterogene Reaktionsmischung auf eine Temperatur in dem Bereich von 100 bis 250°C erwärmt, bis die Polymerisation startet.

Nach der Copolymerisation wird der Initiator entweder abgetrennt oder desaktiviert. Eine Desaktivierung des Katalysators empfiehlt sich deshalb, weil die Copolymerisate in Gegenwart von sauer reagierenden Stoffen und Wasser oder von anderen protischen Lösemitteln einer Hydrolyse unter Molgewichtsabbau unterliegen. Zur Desaktivierung des Initiators versetzt man das Reaktionsgemisch nach Abschluß der Copolymerisation und gegebenenfalls nach einem Abkühlen der Reaktionsmischung mit Alkalien, bevorzugt Natriumhydrogencarbonat, Natronlauge, Kalilauge, Natriumcarbonat, Kaliumcarbonat, Ammoniumcarbonat, Aminen, wie Ammoniak, Methylamin, Dimethylamin, Trimethylamin, Ethylamin, Diethylamin, Dibutylamin, Tributylamin, Ethanolamin, Diethanolamin, Triethanolamin, Morpholin oder Salzen aus starken Basen und schwachen Säuren, wie Natriumacetat, Natriumformiat oder Kaliumhydrogencarbonat. Zur Desaktivierung der sauren Initiatoren eignet sich außerdem Calciumoxid, Calciumhydroxid, basisches Aluminiumoxid sowie basischer Ionenaustauscher. Unlösliche Initiatoren können leicht durch Abfiltrieren entfernt werden.

Wie allgemein in der Polymerchemie bekannt, läßt sich der mittlere Polymerisationsgrad P bei Polykondensations- oder Polyadditionsreaktionen in Abhängigkeit vom Molverhältnis q der an der Polymerisationsreaktion beteiligten funktionellen Gruppen wie folgt ausdrücken:

$$P = \frac{1+q}{1-q} = \frac{a+b}{a-b}$$

wobei q = a/b

a = Mol Divinylether
b = Mol Dihydroxyverbindungen

Wird die Polyadditionsreaktion mit Vinylethergruppen im Überschuß durchgeführt, d. h. bei einem Molverhältnis von (a) : (b) von 2:1 bis 1,001 : 1, so verbleiben im Polyacetal Vinyletherendgruppen (VE). Die Zahl der Vinylethergruppen pro mol Polyacetal kann mit Hilfe der Gleichung

$$VE = 2(a-b)$$

errechnet werden.

An diese Vinyletherendgruppen können einwertige Hydroxyverbindungen (c) bis zu folgenden molaren Mengen (c) angelagert werden:

$$c = 2(a-b).$$

wobei man vorzugsweise c = a - b anlagert.

Für die Herstellung von Polyacetalen aus den Komponenten (a), (b) und (c) ergeben sich folgende Molverhältnisse: a : b : c = 2 bis 1,001 : 1 : 0 bis 2 (a-1).

Bevorzugt werden folgende Molverhältnisse angewendet:

Gruppe a : Gruppe b : Gruppe c

2 : 1 : 1 = 2 : 1 : 1
3 : 2 : 1 = 3/2 : 1 : 1/2
4 : 3 : 1 = 4/3 : 1 : 1/3
5 : 4 : 1 = 5/4 : 1 : 1/4
...
11 : 10 : 1 = 11/10 : 1 : 1/10

usw.

Die Polyacetale werden in der Regel durch kationisch initiierte Polyaddition von (a) Divinylethern und (b) Dihydroxyverbindungen im Molverhältnis 2:1 bis 1:2 hergestellt. Um ein möglichst hohes Molgewicht zu erreichen, stellt man bei der Polyaddition die Mengen an Vinylethergruppen und Hydroxygruppen vorzugsweise im äquimolaren Verhältnis ein. Falls die Monomeren (a) und (b) bei der Polyaddition in solchen Mengenverhältnissen eingesetzt werden, daß Polyacetale mit Vinylethergruppen entstehen, so können daran die Monomeren der Gruppe (c) angelagert werden. Diese Voraussetzung ist immer dann gegeben, wenn die Monomeren (a) gegenüber den Monomeren (b) bei der Polyaddition im stöchiometrischen Überschuß eingesetzt werden. Bei einem Molverhältnis (a) : (b) von 2 : 1 bis 1,001 : 1 beträgt das Molverhältnis der Vinylethergruppen in (a) zur Summe der Hydroxygruppen in (b) und (c) 2 bis 1. Wenn das Molverhältnis der Vinylethergruppen in (a) zur Summe der Hydroxylgruppen in (b) und (c) 1 beträgt, enthalten die Polyacetale keine Vinylethergruppen, während sie bei darunter liegenden Molverhältnissen solche Gruppen aufweisen. Polyacetale aus den Monomeren (a), (b) und (c) sind neue Stoffe. Von besonderem Interesse sind dabei solche Polyacetale, bei deren Herstellung als Komponente (c) Ester eingesetzt werden, die sich von Monohydroxycarbonsäuren ableiten. Werden hydroxylierte Fettsäuren als Monomere der Gruppe (b) eingesetzt, so lassen sich neue Waschmitteladditive auf Fett- und Ölbasis aus nachwachsenden Rohstoffen herstellen.

Bei Polyethylenglykolen kann der Gehalt an Hydroxylgruppen über eine Bestimmung der OH-Zahl ermittelt werden. Durch Wahl von hydrophilen und hydrophoben Monomeren kann die Wasserlöslichkeit der Polyacetale beeinflußt werden. Man erhält Polymere mit Tensidcharakter. Nach DIN 53 993 erniedrigen sie die Oberflächenspannung von Wasser auf 30-35 mN/m.

Als hydrophile Monomere der Gruppe (b) können beispielsweise eingesetzt werden: Ethylenglykol, Diethylenglykol, Triethylenglykol, Tetraethylenglykol, Polyethylenglykole mit Kondensationsgraden über 5. Estergruppen enthaltende Monomere, wie beispielsweise Weinsäurediethylester, Weinsäuredimethylester, Dihydroxystearinsäuremethylester und Milchsäureethylester können nach der Polyaddition mittels Natronlauge, Kalilauge, Ammoniak, Calciumhydroxid oder anderen alkalisch reagierenden Stoffen nachbehandelt werden. Durch diese Nachbehandlung werden Estergruppen unter Bildung von Carboxylatgruppen gespalten. Ionische Gruppierungen wirken stark hydrophil.

Als hydrophobe Monomere der Gruppe (b) können beispielsweise verwendet werden: Butandiol, Hexandiol, Bis-(hydroxymethyl)cyclohexan, Octandiol. Auch Estergruppen tragende Monomere wirken hydrophob, wie Weinsäurediethylester, Dihydroxystearinsäuremethylester oder Milchsäureethylester, solange die Estergruppen nicht durch alkalische Nachbehandlung in ionische Carboxylate umgewandelt sind.

Durch Wahl der hydrophilen und hydrophoben Komponenten kann der Trübungspunkt der Polymerisate in 1 %iger wäßriger Lösung bei pH 7,5 zwischen 0°C und 100°C, bevorzugt zwischen 5°C und 80°C, eingestellt werden. Beispielsweise besitzt eine Lösung eines Polymerisats aus äquimolaren Mengen 1,4-Butandioldivinylether und Triethylenglykol einen Trübungspunkt von 25°C. Eine wäßrige Lösung eines Polymerisates aus 1,4-Butandioldivinylether und Diethylenglykol besitzt einen Trübungspunkt von 5°C.

Bei der Verwendung von Initiatoren, die sich in den Monomeren lösen, wie beispielsweise Oxalsäure, Weinsäure, Adipinsäure, Mandelsäure, wird vorzugsweise 0,01 bis 1 Gew.-% des Initiators im Reaktionsgefäß zusammen mit dem Monomer der Gruppe (a) oder (b) und/oder (c) bei 20°C vorgelegt und auf die Reaktionstemperatur erwärmt und mit dem Monomer der Gruppe (b) oder (a) und/oder (c) kontinuierlich oder absatzweise versetzt, so daß die Reaktionswärme abgeführt werden kann. Es ist auch möglich Mischungen von Monomeren der Gruppen (a), (b) und (c) herzustellen und diese Mischungen einer Polyaddition zu unterwerfen. Vorzugsweise wird eine Divinyletherkomponente zuerst mit der Diolkomponente und dann gegebenenfalls mit dem einwertigen Alkohol umgesetzt.

Besonders bevorzugt ist die Verwendung von Polyacetalen, die durch Säuren katalysierte Polyaddition von

(a) Dihydroxyalkyl-divinylethern, Furan und/oder Divinylether und
(b) Glykolen, Polyalkylenglykolen, Diphenolen und/oder Dihydroxycarbonsäureestern erhältlich sind.

Falls bei der Herstellung der Polyacetale Monomere der Gruppe (c) mitverwendet werden, so sind unter den Monomeren der Gruppe (c) einwertige Alkohole, alkoxylierte einwertige Alkohole und/oder Monohydroxycarbonsäureester bevorzugt. Von besonderem Interesse als Waschmittelzusatz sind Polyacetale, die durch Säuren katalysierte Polyaddition von

(a) Dihydroxyalkyl-divinylethern und

(b) Weinsäureestern

und anschließende Hydrolyse der Estergruppen der Polyacetale mit Basen erhältlich sind. Insbesondere eigenen sich Polyadditionsprodukte von

(a) Butandioldivinylether und

(b) Gemischen aus Triethylenglykol und Weinsäuredimethyl- oder Weinsäurediethylester

im Molverhältnis 4:1 bis 1:1 hergestellte Polyacetale, die durch anschließende Hydrolyse der Estergruppen mit wäßriger Natronlauge, Kalilauge, Ammoniak oder Aminen erhältlich sind.

Außerdem besitzen solche Polyacetale Interesse, die Vinylethergruppen enthalten und durch kationisch initiierte Polyaddition von (a) Divinylethern und (b) Dihydroxyverbindungen und anschließende Addition von (c) Monohydroxyverbindungen an 5 bis 95 %, bevorzugt 30 bis 70 %, der Vinylethergruppen im Polyacetal aus (a) und (b) herstellbar sind. Diese Polyacetale können als Makromonomere zusammen mit anderen monoethylenisch ungesättigten Monomeren unter Einwirkung von Radikale bildenden Polymerisationsinitiatoren copolymerisiert werden. Die dabei entstehenden Copolymerisate enthalten als charakteristisches Strukturelement Einheiten der Vinylethergruppen aufweisenden Makromonomeren einpolymerisiert. Die K-Werte der Copolymerisate betragen 8 bis 100 (gemessen nach H. Fikentscher in 1 gew.-%iger Lösung in Tetrahydrofuran bei 25°C).

Die Makromonomeren werden vorzugsweise durch alkalisch reagierende Stabilisierungsmittel, bevorzugt Natriumhydrogencarbonat, vor der sauer katalysierten Hydrolyse geschützt. In stabilisiertem Zustand sind sie lagerbar. Sie können direkt im Anschluß an die Herstellung mit monoethylenisch ungesättigten Monomeren radikalisch polymerisiert werden. Als Comonomere können beispielsweise eingesetzt werden: monoethylenisch ungesättigte Carbonsäuren, wie beispielsweise Acrylsäure, Methacrylsäure, Maleinsäure, Maleinsäureanhydrid, Fumarsäure, Ester der Carbonsäuren, beispielsweise Methylacrylat, Methylmethacrylat, n-Butylacrylat, tert.Butylacrylat, Ethylhexylacrylat, Maleinsäurediethylester, Maleinsäuredimethylester, Maleinsäurediebutylester, Fumarsäuredimethylester, Acrylamid, Acrylnitril sowie Vinylacetat und Styrol.

Als radikalische Polymerisationsinitiatoren kommen sämtliche für die Polymerisation von ethylenisch ungesättigten Monomeren gebräuchlichen Starter in Betracht, z. B. Peroxide, Hyroperoxide, Peroxiester, Persulfate, Wasserstoffperoxid und Azostarter. Die Polymerisationstemperaturen betragen vorzugsweise 50 bis 150°C.

Vorzugsweise wird die radikalische Polymerisation ohne Verwendung eines Verdünnungsmittels durchgeführt. Es kann jedoch in manchen Fällen von Vorteil sein, ein Verdünnungsmittel zu verwenden. Als geeignete Verdünnungsmittel können beispielsweise verwendet werden: Toluol, Essigsäureethylester, Methanol, Ethanol, Isopropanol, n-Propanol, Butanole, Tetrahydrofuran, Dioxan, Aceton, Methylethylketon, Polyethylenglykole mit Molgewichten bis 10000, Polypropylenglykole, Blockcopolymerisate aus Ethylenoxid und Propylenoxid sowie Umsetzungsprodukte von 1 Mol $C_1$- bis $C_{20}$-Alkoholen mit 1 bis 50 Mol Ethylenoxid und/oder Propylenoxid.

Die Copolymerisate werden nach der Polymerisation in eine wäßrige Lösung oder Dispersion überführt. Ihr pH-Wert soll oberhalb von 7,5 liegen.

Durch alkalische Nachbehandlung der Copolymerisate, beispielsweise durch Einwirkung von wäßrigen Basen, wie Natronlauge, Kalilauge oder Calciumhydroxid, können Estergruppen unter Bildung von Carboxylatgruppen hydrolysiert werden. Die Behandlung erfolgt vorzugsweise ohne Verwendung eines Lösevermittlers und wird bevorzugt in wäßriger Lösung durchgeführt, in dem anfangs bei Temperaturen zwischen 0 und 30°C und bei Fortschreiten der Hydrolyse die Nachbehandlung bei 30 bis 100°C vervollständigt wird. Die Polymerkonzentrationen betragen während der Hydrolyse 10 bis 50 Gew.-%.

Die Polyacetale und die Copolymerisate, die die oben beschriebenen Makromonomeren einpolymerisiert enthalten, lassen sich unter Einwirkung von sauer reagierenden Stoffe in protischen Medien bei pH-Werten unter 7 unter Bildung von Acetaldehyd und anderen Stoffen hydrolysieren. Dadurch kann das Molekulargewicht dieser Polymerisate erniedrigt werden. Diese Polymerisate haben insbesondere dispergierende Eigenschaften und werden ebenfalls als Waschmitteladditiv verwendet.

Der K-Wert der Polyacetale beträgt 8 bis 100, vorzugsweise 10 bis 40 (bestimmt nach H. Fikentscher in Tetrahydrofuran bei 25°C und einer Polyacetalkonzentration von 1 Gew.-%).

Die oben beschriebenen Polyacetale werden erfindungsgemäß als Zusatz zu phosphatarmen und phosphatfreien Wasch- und Reinigungsmitteln verwendet. Unter phosphatarmen Wasch- und Reinigungsmitteln sollen solche Formulierungen verstanden werden, die weniger als 25 Gew.-% an Phosphat, berechnet als Pentanatriumtriphosphat, enthalten. Die Zusammensetzung von pulverförmigen Waschmittelformulierungen kann sehr unterschiedlich sein. Phosphatfreie Waschmittelformulierungen, besonders konzentrierte, pulverförmige Kompaktwaschmittel können neben den üblichen Tensidanteilen als Builder Zeolith und/oder Schichtsilikate in Form kristalliner oder amorpher pulverförmiger hydratisierter Natronwassergläser enthalten. Silikate dieser Art sind bekannt, vgl. EP-B-0164514 und EP-A-0444415. Gleiches gilt für die Zusammensetzung von Reinigungsmittelformulierungen. Wasch- und Reinigungsmittelformulierungen enthalten üblicherweise Tenside in Mengen von 1 bis 50 Gew.-%, in einigen Fällen sogar noch höhere Mengen an Tensid, und gegebenenfalls Builder. Diese Angaben gelten sowohl für flüssige als auch für pulverförmige Wasch- und Reinigungsmittelformulierungen. Beispiele für die Zusammensetzung von Waschformulierungen, die in Europa, in den USA und in Japan gebräuchlich sind, findet man beispielsweise in Chemical und Engn. News, Band 67, 35 (1989) tabellarisch dargestellt sowie in Ullmanns Encyklopädie der technischen Chemie, Verlag Chemie, Weinheim 1983, 4. Auflage, Seiten 63-160. Weitere Angaben über die Zusammensetzung vor Wasch- und Reinigungsmitteln können der WO-A-90/13581 entnommen werden.

Die erfindungsgemäß in Wasch- und Reinigungsmitteln zu verwendenden Polyacetale und Copolymerisate verbessern das Primärwaschvermögen von phosphatarmen und phosphatfreien Wasch- und Reinigungsmitteln, können problemlos in diese Formulierungen eingearbeitet werden, erniedrigen die Viskosität wasserhaltiger Tenside und ergeben stabile, homogene Wasch- und Reinigungsmittelformulierungen.

Aufgrund der viskositätserniedrigenden Wirkung sind die erfindungsgemäß zu verwendenden Polyacetale und Copolymeren wichtige Hilfsmittel bei der Herstellung phosphatreduzierter und phosphatfreier Wasch- und Reinigungsmittel. Durch die Verwendung dieser Hilfsmittel gelingt es, die Slurry-Konzentration im Crutcher auf mindestens 80 % anzuheben. Dies bedeutet eine bessere Wirtschaftlichkeit durch günstigere Auslastung des Sprühturmes sowie eine Einsparung an Energie, weil weniger Wasser verdampft werden muß. Ebenso sind die erfindungsgemäßen zu verwendenden Polyacetale und Copolymere überall dort vorteilhaft einzusetzen, wo bei der Herstellung von Mischungen eine Gelphase durchlaufen wird, die wegen ihrer hohen Viskosität Störungen verursacht.

Die erfindungsgemäß in Wasch- und Reinigungsmitteln einzusetzenden Mengen an Polyacetalen oder den Copolymerisaten, die Polyacetale einpolymerisiert enthalten, beträgt 0,1 bis 50, vorzugsweise 0,5 bis 10 Gew.-%, bezogen auf die jeweiligen Formulierungen.

Die Prozentangaben in den Beispielen sind Gew.-%. Die K-Werte wurden nach H. Fikentscher, Zellulosechemie, Band 13, 58-64 und 71-74 (1932) bestimmt, und zwar - falls nicht anders angegeben - in 1 gew.-%iger Lösung in Tetrahydrofuran bei 25°C.

Beispiele

Herstellung der Polyacetale

Polyacetal 1

In einem 250 ml fassenden Rundkolben werden 69 g 1,4-Butandioldivinylether mit 0,2 g Oxalsäure auf 80°C erwärmt. Bei Erreichen der Temperatur wird aus einem Dosiergefäß 75 g Triethylenglykol innerhalb 30 Minuten zugegeben. In 30 minütigen Abständen wird der Vinylethergruppengehalt mittels Iodtitration ermittelt. In der Tabelle 1 sind die erhaltenen Werte zusammengestellt.

Tabelle 1

| Zeit (h) | Vinylethergehalt (mol) |
|---|---|
| vor Zulaufbeginn | 1,0 |
| 1 | 0,29 |
| 1,5 | 0,14 |
| 2 | 0,11 |
| 2,5 | 0,06 |
| 3 | 0,03 |
| 3,5 | 0,02 |
| 4 | 0,01 |

Polyacetal 2

In einem 250 ml fassenden Rundkolben der mit Rührer und Tropftrichter versehen ist, werden 37,5 g Triethylenglykol, 44,5 g Weinsäurediethylester und 0,2 g Oxalsäure unter Rühren auf 80°C erwärmt. Nach Erreichen der Temperatur werden 69 g 1,4-Butandioldivinylether innerhalb 30 Minuten zugetropft. Die Reaktionsmischung wird 10 Stunden bei 80°C gerührt und mit 1 g fein zerriebenem Natriumhydrogencarbonat versetzt und abgekühlt. Das Polyacetal besitzt den K-Wert 18. Durch Zugabe von 50 g Wasser und 70 g 25 %iger Natronlauge wird alkalisch nachbehandelt, wobei die Estergruppen des einpolymerisierten Weinsäurediethylester in Carboxylatgruppen umgewandelt werden. Man erhält eine wäßrige Lösung des Polymerisates.

Polyacetale 3-7

Als Monomermischung wird eine Mischung aus Weinsäurediethylester, Triethylenglykol und Triethylenglykol gemäß Tabelle 2 verwendet. In einem 250 ml fassenden Rundkolben mit Rührer und Dosiereinheit werden 0,4 g Oxalsäure vorgelegt und mit 1/10 der Monomermischung versetzt. Unter Rühren wird auf 130°C erhitzt und die restliche Monomermischung innerhalb 30 Minuten zudosiert. Die Reaktionsmischung wird weitere 3 Stunden bei 130°C gerührt und mittels Iodtitration auf Vinylethergruppen untersucht. Die Restgehalte an Vinylethergruppen und K-Werte der Polyacetale sind in Tabelle 2 angegeben. Nach Zugabe von Natriumhydrogencarbonat wird eine Wasserdampfdestillation durchgeführt. Durch alkalische Nachbehandlung mittels 100 ml Ethanol und 25 %iger Natronlauge erhält man nach Entfernen des Ethanols eine wäßrige Polymerlösung.

Die in den Tabellen 2 und 3 verwendeten Abkürzungen haben folgende Bedeutung:

DVE:     1,4-Butandioldivinylether
TEG:     Triethylenglykol

WSE: Weinsäurediethylester
VE: Vinylethergruppen
Lac-E: Milchsäureethylester

Tabelle 2

| Polyacetal Nr. | DVE [g] | TEG [g] | WSE [g] | VE [mol] | K-Wert | 25 %ige Natronlauge (g) | Polymergehalt (%) |
|---|---|---|---|---|---|---|---|
| 3 | 142 | 30 | 165 | 0,04 | 19 | 128 | 70 |
| 4 | 142 | 60 | 124 | 0,07 | 20 | 96 | 74 |
| 5 | 142 | 75 | 89* | 0,04 | 19 | 80 | 64 |
| 6 | 142 | 90 | 82 | 0,05 | 21 | 64 | 63 |
| 7 | 142 | 120 | 41 | 0,06 | 23 | 32 | 64 |

*anstelle von WSE wurde Weinsäuredimethylester verwendet.

Polyacetal 8

In einem 250 ml fassenden Rundkolben werden 65 g 1,4-Butandioldivinylether mit 0,2 g Oxalsäure versetzt und auf 80°C erwärmt. Bei Erreichen der Temperatur werden 84 g Weinsäurediethylester zugegeben und weitere 10 Stunden bei 80°C gehalten. Das Polymerisat besitzt einen K-Wert von 14. Durch alkalische Nachbehandlung im Eisbad mittels 75 g 25 %iger Natronlauge erhält man eine klare, 38 %ige Lösung des Polymerisates in Wasser.

Polyacetale 9-13

In einem 500 ml fassenden Rundkolben werden gemäß Tabelle 3 1,4-Butandioldivinylether mit 0,3 g Oxalsäure versetzt und auf 90°C erwärmt. Dann fügt man Triethylenglykol zu und rührt weitere 30 Minuten bei 90°C weiter. Durch Iodtitration ermittelt man die Vinylethergruppengehalte in den Reaktionsmischungen. Die berechneten und ermittelten Werte sind in der Tabelle 3 angegeben.

Zur Absättigung der restlichen Vinylethergruppen fügt man Milchsäureethylester zu und tempert weitere 30 Minuten. Durch erneute Iodtitration ermittelt man den Endwert der Vinylethergruppen im Polyacetal.

In Tabelle 3 sind die Einsatzmengen und die nach der Polyaddition resultierenden Gehalte an Vinylethergruppen aufgelistet.

Tabelle 3

| Polyacetal Nr. | DVE (mol) | TEG (mol) | ber. (mol) | VE gefunden (mol) | Lac-E (mol) | VE (mol) | K-Wert |
|---|---|---|---|---|---|---|---|
| 9 | 1,05 | 1,0 | 0,1 | 0,17 | 0,17 | 0,017 | 21,05 |
| 10 | 1,1 | 1,0 | 0,2 | 0,25 | 0,25 | 0,03 | 20,3 |
| 11 | 1,2 | 1,0 | 0,4 | 0,47 | 0,47 | 0,007 | 15,5 |
| 12 | 1,5 | 1,0 | 1,0 | 1,07 | 1,07 | 0,05 | 11,8 |
| 13 | 2,0 | 1,0 | 2,0 | 2,0 | | | 9,1 |

Allgemeine Vorschrift (a) zur Herstellung der Makromonomeren und (b) deren radikalische Polymerisation

a) Herstellung der Makromonomeren (Tabelle 4):

In einem 250 ml Rundkolben der mit Rührer, Stickstoffbegasung, Thermometer und Tropftrichter ausgestattet ist, wird die in Tabelle 4 angegebene Menge 1,4-Butandioldivinylether und 0,2 g Oxalsäure unter Stickstoff vorgelegt und unter Rühren auf 90°C erwärmt, wobei die Oxalsäure in Lösung geht. Sodann werden die in Tabelle 4 angegebene Zulauf 1 und 2 zugefügt und die angegebene Zeit weitergerührt. Durch Iodtitration kann der Umsatz der Vinylgruppen kontrolliert werden.

b) radikalische Copolymerisation (Tabelle 5):

Durch Zugabe von Natriumhydrogencarbonat zu der gemäß (a) erhaltenen Reaktionsmischung wird die Additionsreaktion beendet und mit Zulauf 3 und Zulauf 4 begonnen. Die Zulaufzeiten betragen 30 Minuten. Dann wird 2 Stunden bei dieser Temperatur weitergerührt. Die K-Werte der Copolymerisate sind in der Tabelle 5 aufgeführt.

Zur alkalischen Nachbehandlung der Estergruppen wird das Copolymerisat mit 200 g Wasser und der in Tabelle 5 angegebenen Menge an 25 %iger wäßriger Natronlauge bei anfangs 0°C und nach 5 Stunden bei 20°C behandelt. Durch entsprechendes Verdünnen mit Wasser wird der in Tabelle 5 angegebene Feststoffgehalt eingestellt.

Die Abkürzungen in den Tabellen 4 und 5 haben folgende Bedeutung:

DVE = 1,4-Butandioldivinylether
WSE = Weinsäurediethylester
TEG = Triethylenglykol
MSE = Maleinsäurediethylester
EGMBE = Ethylenglykolmonobutylether
DEGMEE = Diethylenglykolmonoethylether
tBPP = tert.Butylperpivalat
tBPO = tert.Butylperoctoat
tBPB = tert.Butylperbenzoat
LacE = Milchsäureethylester

Tabelle 4:

| Herstellung der Makromonomeren | | | | | | |
|---|---|---|---|---|---|---|
| Polyacetal Nr. | Vorlage DVE (g) | T (°C) | Zulauf 1 TEG [g] | Nachreaktionszeit (min) | Zulauf 2 [g] | Nachreaktionszeit (min) |
| 14 | 69 | 120 | 60 | 5 | 11,8 EGMBE | 5 |
| 15 | 69 | 90 | 60 | 60 | 11,8 EGMBE | 60 |
| 16 | 69 | 115 | 60 | 5 | 11,8 EGMBE | 5 |
| 17 | 69 | 90 | 60 | 60 | 11,8 EGMBE | 60 |
| 18 | 69 | 115 | 60 | 5 | 11,8 EGMBE | 5 |
| 19 | 69 | 90 | 60 | 60 | 13,4 DEGMEE | 60 |
| 20 | 69 | 90 | 60 | 60 | 13,4 DEGMEE | 60 |
| 21 | 55,2 | 90 | 45 | 30 | 13,4 DEGMEE | 30 |
| 22 | 55,2 | 90 | 45 | 30 | 13,4 DEGMEE | 30 |
| 23 | 41,4 | 90 | 30 | 30 | 13,4 DEGMEE | 30 |
| 24 | 41,4 | 90 | 30 | 30 | 13,4 DEGMEE | 30 |
| 25 | 69 | 90 | 60 | 30 | 11,8 LacE | 30 |
| 26 | 76 | 90 | 75 | 30 | 7 DEGMEE | 30 |
| 27 | 83 | 90 | 75 | 30 | 13,4 DEGMEE | 30 |
| 28 | 96 | 90 | 90 | 30 | 13,4 EGMEE | 30 |

Tabelle 5:

| Radikalische Copolymerisation | | | | | | | |
|---|---|---|---|---|---|---|---|
| Copolymerisat Nr. | Temp. (°C) | Zulauf 3 MSE (g) | Zulauf 4 Initiator (g) | Zeit (h) | K-Wert | Natronlauge (g) | FG (%) |
| 1 | 70 | 17 | 0,5 tBPP | 7 | 22 | 16 | 27 |

Tabelle 5: (fortgesetzt)

| Radikalische Copolymerisation | | | | | | | |
|---|---|---|---|---|---|---|---|
| Copolymerisat Nr. | Temp. (°C) | Zulauf 3 MSE (g) | Zulauf 4 Initiator (g) | Zeit (h) | K-Wert | Natronlauge (g) | FG (%) |
| 2 | 75 | 20 | 1,1 tBPP | 6 | 21 | 16 | 37 |
| 3 | 75 | 19 | 1,2 tBPP | 6 | 21 | 16 | 35 |
| 4 | 90 | 20 | 1,2 tBPO | 6 | 19 | 19 | 36 |
| 5 | 125 | 21 | 1,2 tBPB | 8 | 14 | 16 | 35 |
| 6 | 75 | 18 | 0,8 tBPP | 4 | 22 | 16 | 47 |
| 7 | 90 | 18 | 0,8 tBPO | 4 | 18 | 16 | 28 |
| 8 | 90 | 18* | 0,8 tBPO | 6 | 18 | 16 | 30 |
| 9 | 90 | 19 | 0,8 tBPO | 3 | 17 | 16 | 26 |
| 10 | 75 | 18 | 0,8 tBPP | 4 | 19 | 16 | 34 |
| 11 | 90 | 18 | 0,8 tPBO | 4 | 15 | 16 | 32 |
| 12 | 74 | 17 | 0,8 tBPP | 5 | 24 | 32 | 37 |
| 13 | 75 | 9 | 0,5 tBPP | 5 | 23 | 8 | 32 |
| 14 | 90 | 17 | 1,1 tBPP | 5 | 19 | 16 | 40 |
| 15 | 75 | 17 | 1,0 tBPP | 5 | 20 | 16 | 35 |

*zusätzlich mit 0,5 g Maleinsäureanhydrid versetzt

Anwendungstechnische Eigenschaften

Ein Teil der oben beschriebenen Polyacetale wurde unter den im folgenden angegebenen Waschbedingungen als Waschmittelzusatz in einem Flüssigwaschmittel getestet. Die dabei erhaltenen Ergebnisse sind in Tabelle 6 zusammengefaßt.

Waschbedingungen:

Primärwaschwirkung und Vergrauung

| | |
|---|---|
| Waschgerät | Launder-o-meter |
| Waschtemperatur | 60°C |
| Wasserhärte | 3 mmol Ca/l = 16,8°d |
| Verhältnis Ca:Mg | 3 : 1 |
| Waschzeit | 30 min (einschl. Aufheizzeit) |
| Waschzyklen | 4 |
| Waschmitteldosierung | 6 g/l |
| Flottenverhältnis | 1 : 14,3 |

Gewebe

Weißgewebe: Baumwolle/Polyester-Gewebe Polyester-Gewebe
Schmutzgewebe: WFK 20 D (Wäschereiforschung Krefeld)
(wird nach jeder Wäsche erneuert)

Weißgradmessung im Elrepho in % Remission

| Weißgrad der ungewaschenen Gewebe: | |
|---|---|
| Baumwolle/Polyester | 80,4 |
| Polyester | 78,0 |
| WFK 20 D | 37,8 |

Angegeben sind jeweils die Remissionswerte auf den einzelnen Geweben vor und nach der Wäsche.

Je größer die Remissionswertdifferenz auf dem Schmutzgewebe WFK 20 D ist, umso höher ist die Primärwaschwirkung. Je kleiner die Differenzen auf den Weißgeweben, umso besser ist die Vergrauungsinhibierung.

Zum Vergleich wurde eine polymerisatfreie Waschmittelformulierung getestet.

Flüssigwaschmittel:

Formulierung A

| 10 % | Natriumdodecylbenzolsulfonat, 50 %ig in Wasser |
|---|---|
| 3 % | des Reaktionsproduktes aus 1 Mol C13/15-Oxoalkohol und 7 Mol Ethylenoxid |
| 2 % | Polypropylenglykol MW 600 |
| 77 % | Wasser |
| 8 % | Polyacetal bzw. Makromonomer einpolymerisiert enthaltendes Copolymerisat |

Tabelle 6

| Bsp. Nr. | Polyacetal Nr. | Primärwaschwirkung WFK 20D | Vergrauung PES/BW | PES |
|---|---|---|---|---|
| 1 | 1 | 52,9 | 69,0 | 70,0 |
| 2 | 2 | 55,7 | 69,2 | 71,5 |
| 3 | 3 | 56,9 | 67,9 | 74,3 |
| 4 | 4 | 59,7 | 69,2 | 74,0 |
| 5 | 5 | 57,2 | 69,9 | 74,0 |
| 6 | 6 | 60,2 | 69,5 | 73,3 |
| 7 | 7 | 58,2 | 68,5 | 73,7 |
| 8 | 8 | 59,9 | 64,0 | 70,0 |
| 9 | 9 | 54,4 | 68,5 | 71,1 |
| 10 | 10 | 54,3 | 69,3 | 73,0 |
| 11 | 11 | 54,2 | 70,9 | 74,1 |
| 12 | 12 | 52,1 | 70,1 | 74,4 |
| | Copolymerisat Nr. | | | |
| 13 | 1 | 62,2 | | |
| 14 | 2 | 62,2 | | |
| 15 | 3 | 62,2 | | |
| 16 | 4 | 63,4 | | |
| 17 | 5 | 58,7 | | |
| 18 | 6 | 62,2 | | |

Tabelle 6   (fortgesetzt)

| Bsp. Nr. | Polyacetal Nr. | Primärwaschwirkung WFK 20D | Vergrauung PES/BW | PES |
|---|---|---|---|---|
| | Copolymerisat Nr. | | | |
| 19 | 7 | 61,4 | | |
| 20 | 8 | 64,7 | | |
| 21 | 9 | 62,4 | | |
| 22 | 10 | 62,8 | | |
| 23 | 11 | 63,2 | | |
| 24 | 12 | 59,6 | 74,8 | 76,3 |
| 25 | 13 | 57,5 | 71,5 | 75,8 |
| 26 | 14 | 59,5 | 71,6 | 74,7 |
| 27 | 15 | 59,7 | 70,6 | 71,7 |
| Vergleichsbeispiel 1 | ohne Polymer | 50,9 | 67,0 | 71,6 |

Wie aus den Waschversuchen zu erkennen ist, verbessern die Polyacetale das Primärwaschvermögen erheblich, ohne daß erhöhte Vergrauung auf Polyester/Baumwolle Mischgewebe oder Polyestergewebe auftritt.

Alle erfindungsgemäßen Polymerisate sind in der Waschmittelformulierung A ohne Probleme einarbeitbar und ergeben stabile, homogene Lösungen.

Viskositätserniedrigende Wirkung

Man stellt eine Mischung aus dem wasserfreien Tensid A (Additionsprodukt von 7 mol Ethylenoxid von 1 mol eines $C_{12}/C_{15}$-Oxoalkoholgemisches) und den Copolymeristen Nr. 7, 9, 10, 12, 13 und 15 her. Die Anteile der Copolymerisate in den Mischungen betragen jeweils 5 %, bezogen auf Tensid. In Tabelle 7 sind die Viskositäten der Mischungen aus Tensid A und den Copolymerisaten bei unterschiedlichen Gehalten an Wasser angegeben. Wie daraus ersichtlich ist, wirken die Copolymerisate als Viskositätserniedriger für das wasserhaltige Tensid A.

Tabelle 7

| Viskosität [mPas] der Mischung aus Tensid A, Copolymer und Wasser | | | | |
|---|---|---|---|---|
| Copoly-merisat Nr. | Tensidgehalt | | | |
| | 80 % | 60 % | 40 % | 20 % |
| 7 | 127 | 9350 | 402 | 237 |
| 9 | 106 | 7350 | 519 | 264 |
| 10 | 92 | 17500 | 392 | 245 |
| 12 | 123 | 8300 | 349 | 374 |
| 13 | 102 | 3740 | 416 | 144 |
| 15 | 96 | 8130 | 381 | 192 |
| Vergleichsbeispiel 2 ohne Polymer | 46000 | 25000 | 158000 | 1000 |

**Patentansprüche**

1.  Verwendung von Polyacetalen, die durch kationisch initiierte Polyaddition von

(a) Divinylethern und
(b) Dihydroxyverbindungen sowie gegebenenfalls
(c) Monohydroxyverbindungen

erhältlich sind und die K-Werte (bestimmt nach H. Fikentscher in Tetrahydrofuran bei 25°C und einer Polyacetalkonzentration von 1 Gew.-%) von 8 bis 100 haben, als Zusatz zu weniger als 25 Gew.-% Phosphat enthaltenden oder phospatfreien Wasch- und Reinigungsmitteln.

2. Verwendung nach Anspruch 1, dadurch gekennzeichnet, daß die Polyacetale durch kationisch initiierte Polyaddition von (a) Divinylethern und (b) Dihydroxyverbindungen im Molverhältnis 2:1 bis 1:2 erhältlich sind.

3. Verwendung nach Anspruch 1, dadurch gekennzeichnet, daß die Polyacetale durch kationisch initiierte Polyaddition von (a) Divinylethern und (b) Dihydroxyverbindungen im Molverhältnis 2:1 bis 1,001:1 und anschließende Addition von (c) Monohydroxyverbindungen an die im Polyacetal vorhandenen Vinylethergruppen erhältlich sind.

4. Verwendung nach den Ansprüchen 1 oder 2, dadurch gekennzeichnet, daß die Polyacetale durch Säuren katalysierte Polyaddition von

   (a) Dihydroxyalkyl-divinylethern, Furan und/oder Divinylether und
   (b) Glykolen, Polyalkylenglykolen, Diphenolen und/oder Dihydroxycarbonsäureestern

   erhältlich sind.

5. Verwendung nach den Ansprüchen 1 oder 3, dadurch gekennzeichnet, daß als Monohydroxyverbindungen (c) einwertige Alkohole, alkoxylierte einwertige Alkohole und/oder Monohydroxycarbonsäureester eingesetzt werden.

6. Verwendung nach Anspruch 1, dadurch gekennzeichnet, daß die Polyacetale durch Säuren katalysierte Polyaddition von

   (a) Dihydroxyalkyl-divinylethern und
   (b) Weinsäureestern

   anschließende Hydrolyse der Estergruppen der Polyacetale mit Basen erhältlich sind.

7. Verwendung nach den Ansprüchen 1 oder 3, dadurch gekennzeichnet, daß die Polyacetale durch Säuren katalysierte Polyaddition von

   (a) Butandiol-divinylether und
   (b) Gemischen aus Triethylenglykol und Weinsäuredimethyl- oder Weinsäurediethylester im Molverhältnis 4:1 bis 1:4

   und anschließende Hydrolyse der Estergruppen der Polyacetale mit wäßriger Natronlauge, Kalilauge, Ammoniak oder Aminen erhältlich sind.

**Claims**

1. The use of polyacetals which are obtainable by cationically initiated polyaddition of

   (a) divinyl ethers and
   (b) dihydroxy compounds and also, optionally,
   (c) monohydroxy compounds

   and have K values (determined by the method of H. Fikentscher at 25°C in tetrahydrofuran on a polyacetal concentration of 1% by weight) of from 8 to 100 as additives in detergent and cleaner formulations which are phosphate-free or include less than 25% by weight of phosphate.

2. A use as claimed in claim 1, characterized in that the polyacetals are obtainable by cationically initiated polyaddition of (a) divinyl ethers and (b) dihydroxy compounds in a molar ratio of from 2:1 to 1:2.

3. A use as claimed in claim 1, characterized in that the polyacetals are obtainable by cationically initiated polyaddition of (a) divinyl ethers and (b) dihydroxy compounds in a molar ratio of from 2:1 to 1.001:1 and subsequent addition of (c) monohydroxy compounds to the vinyl ether groups present in the polyacetal.

4.  A use as claimed in either of claims 1 and 2, characterized in that the polyacetals are obtainable by acid-catalyzed polyaddition of

    (a) dihydroxyalkyl divinyl ethers, furan and/or divinyl ether and
    (b) glycols, polyalkylene glycols, diphenols and/or dihydroxycarboxylic esters.

5.  A use as claimed in either of claims 1 and 3, characterized in that the monohydroxy compounds used (c) are monohydric alcohols, alkoxylated monohydric alcohols and/or monohydroxycarboxylic esters.

6.  A use as claimed in claim 1, characterized in that the polyacetals are obtainable by acid-catalyzed polyaddition of

    (a) dihydroxyalkyl divinyl ethers and
    (b) tartaric esters

    and subsequent hydrolysis of the ester groups of the polyacetals with bases.

7.  A use as claimed in either of claims 1 and 3, characterized in that the polyacetals are obtainable by acid-catalyzed polyaddition of

    (a) butanediol divinyl ether and
    (b) mixtures of triethylene glycol and dimethyl or diethyl tartrate in a molar ratio of 4:1 to 1:4

    and subsequent hydrolysis of the ester groups of the polyacetals with aqueous sodium hydroxide solution, potassium hydroxide solution, ammonia or amines.

**Revendications**

1.  Utilisation de polyacétals obtenus par polyaddition amorcée de façon cationique

    (a) de divinyléthers et
    (b) de composés dihydroxy ainsi qu'éventuellement
    (c) de composés monohydroxy,

    et ayant des valeurs de K de 8-100 (déterminées selon H. Fikentscher dans du tétrahydrofuranne à 25°C avec une concentration en polyacétal de 1% en poids), en tant qu'additifs pour des agents de lavage et de nettoyage dépourvus de phosphates ou contenant moins de 25% en poids de phosphates.

2.  Utilisation selon la revendication 1, caractérisée en ce que les polyacétals sont obtenus par polyaddition amorcée de façon cationique (a) de divinyléthers et (b) de composés dihydroxy dans un rapport en moles de 2 : 1 à 1 : 2.

3.  Utilisation selon la revendication 1, caractérisée en ce que les polyacétals sont obtenus par polyaddition amorcée de façon cationique (a) de divinyléthers et (b) de composés dihydroxy dans un rapport en moles de 2 : 1 à 1,001 : 1, suivie d'une addition de (c) composés monohydroxy sur les groupements éther vinylique présents dans le polyacétal.

4.  Utilisation selon les revendications 1 ou 2, caractérisée en ce que les polyacétals sont obtenus par polyaddition catalysée par des acides

    (a) de dihydroxyalkyl-divinyléthers, de furanne et/ou de divinyléther et
    (b) de glycols, de polyalkylèneglycols, de diphénols et/ou d'esters d'acides dihydroxycarboxyliques.

5.  Utilisation selon l'une quelconque des revendications 1 à 3, caractérisée en ce que l'on utilise en tant que composés monohydroxy (c) des alcools monofonctionnels, des alcools monofonctionnels alcoxylés et/ou des esters d'acides monohydroxycarboxyliques.

**6.** Utilisation selon la revendication 1, caractérisée en ce que les polyacétals sont obtenus par polyaddition catalysée par des acides

(a) de dihydroxyalkyl-divinyléthers et
(b) d'esters d'acide tartrique,

suivie de l'hydrolyse des groupements ester des polyacétals, par des bases.

**7.** Utilisation selon l'une quelconque des revendications 1 à 3, caractérisée en ce que les polyacétals sont obtenus par polyaddition catalysée par des acides

(a) de butanediol-divinyléther et
(b) de mélanges de triéthylèneglycol et de tartrate de diméthyle ou de diéthyle dans un rapport en moles de 4 : 1 à 1 : 4

suivie d'une hydrolyse des groupements ester des polyacétals à l'aide de lessive de soude aqueuse, de lessive de potasse, d'ammoniaque ou d'amines.